(19) Europäisches Patentamt European Patent Office Office européen des brevets

(11) EP 4 576 829 A1

(12) EUROPEAN PATENT APPLICATION

(43) Date of publication:
25.06.2025 Bulletin 2025/26

(21) Application number: 24218715.1

(22) Date of filing: 10.12.2024

(51) International Patent Classification (IPC):
H04R 25/00 (2006.01)    H04R 25/04 (2006.01)

(52) Cooperative Patent Classification (CPC):
H04R 25/55; H04R 25/04; H04M 1/72478;
H04R 25/558; H04R 2205/041

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.12.2023 GB 202319741

(71) Applicant: Nokia Technologies Oy
02610 Espoo (FI)
(72) Inventors:
• ERONEN, Antti Johannes
  Tampere (FI)
• LEHTINIEMI, Arto Juhani
  Lempäälä (FI)
• VILERMO, Miikka Tapani
  Siuro (FI)

(74) Representative: Nokia EPO representatives
Nokia Technologies Oy
Karakaari 7
02610 Espoo (FI)

(54) **ADAPTIVE AUDIO PROCESSING**

(57)   An apparatus comprising means for:
audio processing of audio data specifying a target sound for rendering;
wireless communication with a hearing aid to obtain audio processing settings of the hearing aid; and
adjusting audio processing of the audio data in dependence upon the audio processing settings of the hearing aid to create adjusted audio data for rendering as adjusted target sound.

FIG. 1

**Description**

TECHNOLOGICAL FIELD

Examples of the disclosure relate to adaptive audio processing.

BACKGROUND

It may be desirable to control where audio processing occurs.

For example, some devices may have more, better, or different audio processing capabilities than other devices. The quality of audio rendering may (or may not) be affected by which device is used for audio processing.

For example, some devices may have a relatively lower energy cost for audio processing compared to other devices because, for example, they are more efficient or store energy more cheaply. The cost of audio rendering may (or may not) be affected by which device is used for audio processing.

BRIEF SUMMARY

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG 1 illustrates an example of a hearing aid 10 and an apparatus 20;
FIG 2 illustrates an example, wherein the apparatus 20 and rendering device 41 are separate and together form a system 50;
FIG 3A and 3B illustrate examples of an audiogram 40 for a left ear of the user and a right ear of the user;
FIG 4A illustrates the (original) system characteristic function 70 for a left ear hearing aid 10_1 and FIG 4B illustrates the (original) system characteristic function 70 for a right ear hearing aid 10_2;
FIG 5A illustrates the addition of the left-ear audiogram and the left-ear (original) hearing aid system characteristic function 70 and FIG 5B illustrates the addition of the right-ear audiogram and the right-ear (original) hearing aid system characteristic function 70;
FIG 6 illustrates an apparatus/system 50 at least partially compensating for hearing-loss 62 in the rendered, adjusted target sound 42;
FIG 7A and 7B illustrate, respectively an original system characteristic function 70 for a left ear hearing aid 10_1 and an original system characteristic function 70 for a right ear hearing aid 10_2;
FIGs 8A & 8B illustrate partial hearing-loss compensation at the respective hearing aids for the left and right ears;
FIGs 9A & 9B illustrate partial hearing-loss compensation at the apparatus 20 for the left and right ears;
FIG 10 illustrates a combination of the target sound 64, adjusted audio processing at the respective hearing aids and adjusted audio processing 30 at the apparatus 20, when the hearing aid(s) 10 are in use for the left ear (L) and for the right ear (R);
FIG 11 illustrates a combination of the target sound 64, and adjusted audio processing 30 at the apparatus 20 when the hearing aid(s) 10 are not in use for the left ear (L) and for the right ear (R);
FIG 12 illustrates an example of a method;
FIG 13 illustrates an example of a controller for the apparatus 20; and
FIG 14 illustrates an example of a computer program for the apparatus 20.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g. 10) and a specific instance of the class (member of the set) can be referenced using the reference number with a numerical type subscript index (e.g. 10_1) and a non-specific instance of the class (member of the set) can be referenced using the reference number with a variable type subscript index (e.g. 10_i).

DETAILED DESCRIPTION

The following examples, relate to an apparatus 20 comprising means for:

audio processing 30 of audio data 32 specifying a target sound 64 for rendering 40;
wireless communication with a hearing aid 10 to obtain audio processing settings 12 of the hearing aid 10; and
adjusting audio processing 30 of the audio data 32 in dependence upon the audio processing settings 12 of the hearing aid 10 to create adjusted audio data 34 for rendering as adjusted target sound 42.

A hearing aid 10 is a device that is worn at or in the ear to selectively amplify extra-ear sound to output intra-ear sound to assist hearing.

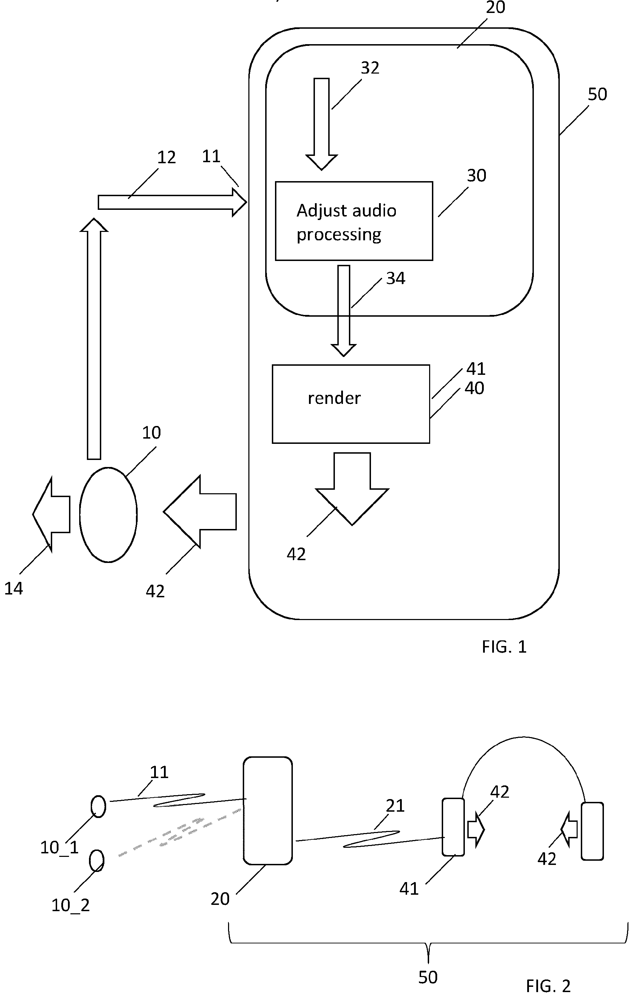

FIG. 1 illustrates an example of a hearing aid 10 and an apparatus 20.

The apparatus 20 comprises means for audio processing 30 of audio data 32. The audio data 32 specifies a target sound 64 (not illustrated) for rendering 40. The rendering of the target sound 64 (not illustrated in FIG 1) can, for example, be performed by rendering device 41.

In this example, the apparatus 20 is configured to adjust audio processing 30 of the audio data 32 to create adjusted audio data 34 for rendering 40 as adjusted target sound 42. The rendering of the adjusted target sound 42 can, for example, be performed by rendering device 41

A hearing aid 10 is configured to use audio processing to provide hearing-loss compensation to a user. The audio processing performed is characterized by audio processing settings 12 of the hearing aid 10. The audio processing to achieve hearing-loss compensation has a system characteristic function. This can for example be a transform that relates input audio to output audio.

The apparatus 20 comprises means for wireless communication 11 with the hearing aid 10 to obtain the audio processing settings 12 of the hearing aid 10.

The apparatus 20 comprises means for adjusting audio processing 30 of the audio data 32 in dependence upon the audio processing settings 12 of the hearing aid 10 to create adjusted audio data 34 for rendering as adjusted target sound 42. The rendering of the adjusted target sound 42 is performed by a rendering device 41 distinct from the hearing aid 10. The apparatus 10 can comprise or be comprised in the rendering device 41 or can be distinct from the rendering device 41.

The adjusted audio processing has a system characteristic function. This can for example be a transform that relates input audio (as specified by the audio data 32) to output audio (the rendered, adjusted target sound 42)

In this example, but not necessarily all examples, the rendered, adjusted target sound 42 is provided as input audio to the hearing aid which renders hearing-loss compensated target sound 14 to the user.

In this example, the apparatus 20 and rendering device 41 are separate and together form a system 50. In other examples, the apparatus 20 comprises or is comprised in the rendering device 40.

FIG. 2 illustrates an example where the apparatus 20 and rendering device 41 are separate and together form a system 50. The apparatus 20 and rendering device 41 are in communication 21, which in this example (but not necessarily all examples) is wireless communication. In this example, the hearing aid 10 and the apparatus 20 are in wireless communication. In some examples, the apparatus 20 is a hand-portable electronic device, for example a mobile cellular telephone.

In some examples, the audio rendering device 41 is on-ear or over ear headphones that can be used by a user who is concurrently using the hearing aid(s) 10. In some examples, the audio rendering device 41 is in-ear, on-ear or over ear headphones that can be used by a user who is not concurrently using the hearing aid(s) 10.

A user can have hearing-loss in one or both ears and the hearing-loss can be different in different ears.

A (left-ear) hearing aid 10_1 is configured to use (left-ear) audio processing to provide (left-ear) hearing-loss compensation to (a left ear of) a user. The (left-ear) audio processing performed is characterized by (left-ear) audio processing settings 12 of the (left-ear) hearing aid 10. The (left-ear) audio processing to achieve (left-ear) hearing-loss compensation has a (left-ear) system characteristic function. This can for example be a (left-ear) transform that relates (left-ear) input audio to (left-ear) output audio.

A (right-ear) hearing aid 10_1 is configured to use (right-ear)audio processing to provide (right-ear) hearing-loss compensation to (a right ear of) a user. The (right-ear) audio processing performed is characterized by (right-ear) audio processing settings 12 of the (right-ear) hearing aid 10. The (right-ear) audio processing to achieve (right-ear) hearing-loss compensation has a (right-ear) system characteristic function. This can for example be a (right-ear) transform that relates (right-ear) input audio to (right-ear) output audio.

The adjustment of audio processing 30 at the apparatus 20, described in relation to FIG. 1 can, for example be performed for a (left ear) hearing aid 10 using (left ear) audio processing settings 12 of the left-ear hearing aid 10_1. The adjustment of audio processing 30 at the apparatus 20, described in relation to FIG. 1 can, for example be performed for a (right ear) hearing aid 10 using (right ear) audio processing settings 12 of the right-ear hearing aid 10_2.

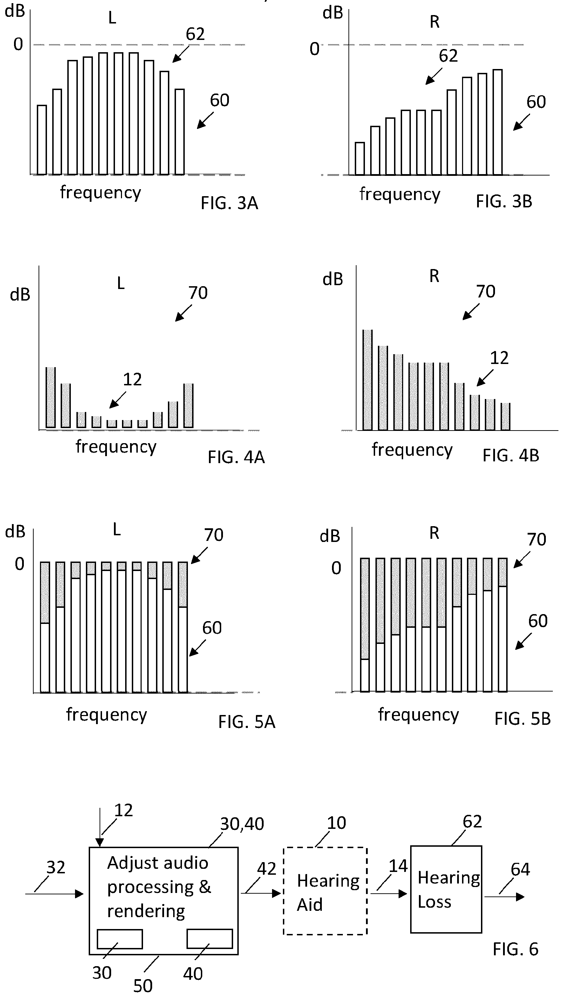

FIG. 3A illustrates an example of an audiogram 60 for a left ear of the user. FIG. 3B illustrates an example of an audiogram 60 for a right ear of the user. An audiogram records, for each of a plurality of different frequency bins, the minimum amplitude sound the user can hear.

A hearing-loss 62 of the user is the difference between the minimum amplitude sound the user can hear and a minimum amplitude sound an unimpaired person can hear for each of the plurality of different frequency bins (illustrated by a dotted line).

The hearing-loss 62 of the user is compensated for by the hearing aid 10. The hearing aid 10 is configured to use audio processing to provide hearing-loss compensation to a user. As illustrated in FIGs 4A and 4B, the audio processing by the hearing aid 10 to achieve hearing-loss compensation has a system characteristic function 70. This can for example be a transform that relates input audio to output audio. The audio processing performed is characterized by audio processing settings 12 of the hearing aid 10. The system characteristic function 70 is sometimes referred to as the original hearing aid system characteristic function 70 to enable differentiation from an adjusted hearing aid system characteristic function 80 described later.

FIG. 4A illustrates the system characteristic function 70 for a left ear hearing aid 10_1. FIG. 4B illustrates the system characteristic function 70 for a right ear hearing aid 10_2. FIGs 4A and 4B, illustrate the system characteristic function 70 as an additive function. However, system characteristic function 70 can be expressed in other forms such as a multiplicative transform.

FIG. 5A illustrates the combination (addition in this example) of the left-ear audiogram 60 and the left-ear hearing aid system characteristic function 70 to compensate for the hearing-loss of the user and achieve a maximum amplitude sound more similar to what an unimpaired person can hear for each of the plurality of different frequency bins. FIG. 5B illustrates the combination (addition in this example) of the right-ear audio gram 60 and the right-ear hearing aid system characteristic function 70 to compensate for the hearing-loss of the user and achieve a maximum amplitude sound more similar to what an unimpaired person can hear for each of the plurality of different frequency bins.

Although the hearing-loss compensation in these examples is shown as complete (full) this is only for ease of illustration. In actual implementations the hearing-loss compensation is not always complete (full).

FIG. 6 illustrates the apparatus/system 50 a least partially compensating for hearing-loss in the rendered, adjusted target sound 42.

The apparatus /system 50, as previously described, comprises means for:

audio processing 30 of audio data 32 specifying a target sound 64 for rendering 40;
wireless communication with a hearing aid 10 to obtain audio processing settings 12 of the hearing aid 10; and
adjusting audio processing 30 of the audio data 32 in dependence upon the audio processing settings 12 of the hearing aid 10 to create adjusted audio data 34 for rendering as adjusted target sound 42. In this example, it also comprises a rending device 41 for rendering the adjusted target sound 42.

The adjusted audio processing 30 has a system characteristic function. This can for example be a transform that relates input audio (as specified by the audio data 32) to output audio (the rendered, adjusted target sound 42).

In this example, but not necessarily all examples, the rendered, adjusted target sound 42 is provided as input audio to the hearing aid 10 which renders hearing-loss compensated target sound 14 to the user. The user perceives the target sound 64 because their hearing-loss 62 converts the compensated target sound 14 to the target sound 64.

The process as illustrated in FIG. 6 can occur independently for the left ear and/or the right ear.

In the example illustrated, the hearing aid 10 performs audio processing of the rendered, adjusted target sound 42 to produce hearing-loss compensated target sound 14. The hearing-loss compensated target sound 14 is different to the rendered, adjusted target sound 42.

In this example, but not necessarily all examples, the adjusted audio processing 30 of the audio data 32 in dependence upon the audio processing settings 12 of the hearing aid 10 to create adjusted audio data 34 for rendering as adjusted target sound 42, performs a first part of a hearing-loss compensation and the audio processing of the rendered, adjusted target sound 42 by the hearing aid 10 (if any) to produce the hearing-loss compensated target sound 14 performs a second part of a hearing-loss compensation. The hearing-loss compensated target sound 14 has hearing-loss compensation as a consequence of the first part of a hearing-loss compensation and the second part of a hearing-loss compensation. The combination of the first part of a hearing-loss compensation and the second part of a hearing-loss compensation can, for example, replicate the hearing-loss compensation defined by the audio processing settings 12 of the hearing aid 10. Communication between the apparatus 20 and the hearing aid 10 can co-ordinate the first part of hearing-loss compensation at the apparatus 20 and the second part of hearing-loss compensation at the hearing aid 10. Communication between the apparatus 20 and the hearing aid 10 can aid use or continuing use of the hearing aid 10 by the user.

In at least some examples, the apparatus 20 comprises means for receiving from the hearing aid 10 an indication that the hearing aid 10 is in use. The hearing aid 10 can for example comprise a proximity detector that detects whether or not it is in-ear. The audio processing at the apparatus 20 can, for example, be dependent upon whether a hearing aid is in use or is not in use.

In at least some examples, the apparatus 20 comprises means for providing to a user of the hearing aid 10 an indication to use the hearing aid 10

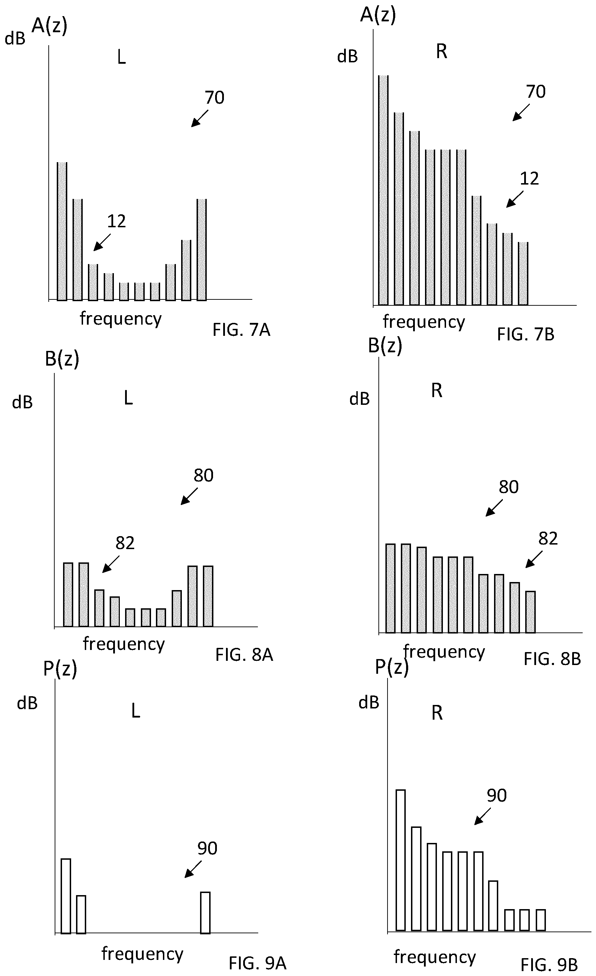

As illustrated in FIGs 7A and 7B (and as previously illustrated in FIGs 4A and 4B), the original audio processing by the hearing aid 10 to achieve full hearing-loss compensation has a system characteristic function 70. FIG. 7A illustrates the original system characteristic function 70 for a left ear hearing aid 10_1. FIG. 7B illustrates the original system characteristic function 70 for a right ear hearing aid 10_2. FIGs 7A and 7B, illustrate the original hearing aid system characteristic functions 70 as an additive function. However, a system characteristic function 70 can be expressed in other forms such as a multiplicative transform.

The second part of the hearing-loss compensation is shown in FIGs 8A & 8B for the left and right ears respectively. The first part of the hearing-loss compensation is illustrated in FIGs 9A & 9B for the left and right ears respectively. In these examples, the illustrated system characteristic functions 80, 90 are illustrated as additive functions.

FIG. 8A illustrates the adjusted hearing aid system characteristic function 80 for the left ear hearing aid 10_1 used to provide the second part of the hearing-loss compensation for the left ear. The second part of the hearing-loss compensation at the hearing aid 10_1 for the left ear is defined by adjusted audio processing settings 82 that are different to the original audio processing settings 12 (FIG. 7A, FIG. 4A).

FIG. 9A illustrates an additional audio processing system characteristic function 90 for the left ear, produced by the adjusted audio processing 30, and used to provide the first part of the hearing-loss compensation at the apparatus 20 for the left ear.

The combination (addition in this example) of the first part of a hearing-loss compensation (the additional audio processing system characteristic function 90 (FIG. 9A) and the second part of a hearing-loss compensation (the adjusted hearing aid system characteristic function 80, FIG. 8A) replicates the hearing-loss compensation (FIG. 7A) defined by the audio processing settings 12 of the hearing aid 10 which defines the original hearing aid system characteristic function 70 for the left ear hearing aid 10_1 (FIG. 7A, FIG. 4A).

The adjusted audio processing 30 at the hearing aid 10, in dependence upon the audio processing settings 12, performs a remainder of the defined hearing-loss compensation. In this example, the addition made by the adjustment (in dependence upon the audio processing settings 12) to the system characteristic function for audio processing 30, defined by the additional audio processing system characteristic function 90 (FIG. 9A), is removed (subtracted in this example) from the original hearing aid system characteristic function 70 defined by the audio processing settings 12(FIG. 7A) to provide the adjusted hearing aid system characteristic function 80 (FIG. 8A).

FIG. 8B illustrates the adjusted hearing aid system characteristic function 80 for the right ear hearing aid 10_2 used to provide the second part of the hearing-loss compensation for the right ear. The second part of the hearing-loss compensation at the hearing aid 10_2 for the right ear is defined by adjusted audio processing settings 82 that are different to the original audio processing settings 12 (FIG. 7B, FIG. 4B).

FIG. 9B illustrates an additional audio processing system characteristic function 90 for the right ear, produced by the adjusted audio processing 30, and used to provide the first part of the hearing-loss compensation at the apparatus 20 for the right ear.

The combination (addition in this example) of the first part of a hearing-loss compensation (the additional audio processing system characteristic function 90, FIG. 9B) and the second part of a hearing-loss compensation (the adjusted hearing aid system characteristic function 80, FIG. 8B) replicates the hearing-loss compensation (FIG 7B) defined by the audio processing settings 12 of the hearing aid 10 which defines the original hearing aid system characteristic function 70 for the right ear hearing aid 10_2 (FIG. 7B, FIG. 4B)

The adjusted audio processing 30 at the hearing aid 10, in dependence upon the audio processing settings 12, performs a remainder of the defined hearing-loss compensation. In this example, the addition made by the adjustment in dependence upon the audio processing settings 12 to the system characteristic function for audio processing 30, defined by the additional audio processing system characteristic function 90 (FIG. 9B), is removed (subtracted in this example) from the original hearing aid system characteristic function 70 defined by the audio processing settings 12 (FIG. 7B) to provide the adjusted hearing aid system characteristic function 80 (FIG. 8B).

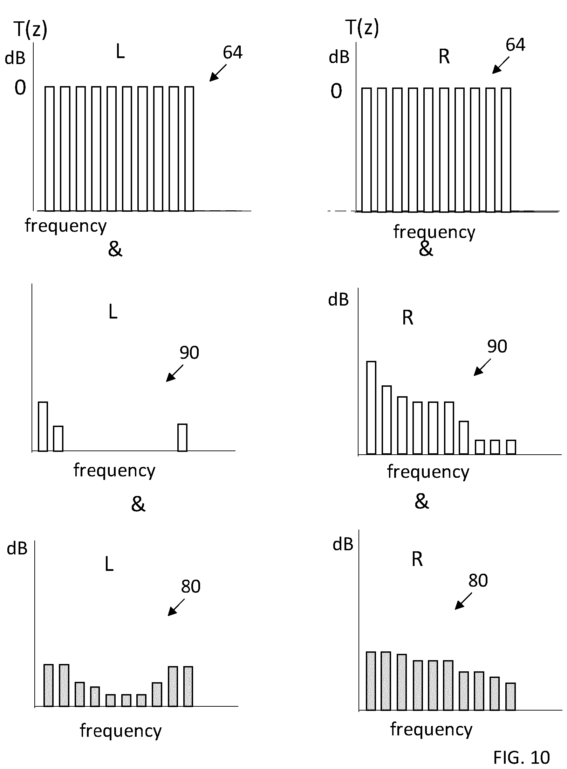

FIG. 10 illustrates an example (simplified) of a target sound 64 for the left ear (L) and for the right ear (R) when the hearing aid(s) 10 are in use for audio processing in combination with the adjustment of audio processing 30 at the apparatus 20. The additional audio processing system characteristic function 90 provides the first part of the hearing-loss compensation at the apparatus 20. The adjusted hearing aid system characteristic function 80 provides the second part of the hearing-loss compensation at the hearing aid 10. The combination of the first part of a hearing-loss compensation (the additional audio processing system characteristic function 90) and the second part of a hearing-loss compensation (the adjusted hearing aid system characteristic function 80) replicates the hearing-loss compensation defined by the original audio processing settings 12 of the hearing aid 10 which defines the original hearing aid system characteristic function 70 for the hearing aid 10. The combination of the target sound 64, the first part of the hearing-loss compensation (the additional audio processing system characteristic function 90) and the second part of a hearing-loss compensation (the adjusted hearing aid system characteristic function 80) produces hearing-loss compensated target sound 14 to the user. The user perceives the target sound 64 because of their hearing-loss 62 (previously illustrated in FIGs 5A, 5B).

Referring back to FIG 8, in other examples, the hearing aid 10 is not used for audio processing the rendered, adjusted target sound 42 to produce the hearing-loss compensated target sound 14. The hearing-loss compensated target sound 14 is then the same as the rendered, adjusted target sound 42.

In this example, but not necessarily all examples, the adjusted audio processing 30 of the audio data 32 in dependence upon the audio processing settings 12 of the hearing aid 10 to create adjusted audio data 34 for rendering as adjusted target sound 42, performs hearing-loss compensation. The rendered, adjusted target sound 42 (the hearing-loss compensated target sound 14) has hearing-loss compensation as a consequence of the hearing-loss compensation and can replicate the hearing-loss compensation defined by the audio processing settings 12 of the hearing aid 10. Communication between the apparatus 20 and the hearing aid 10 can co-ordinate the hearing-loss compensation at the apparatus 20 and the non-use or removal of the hearing aid 10 by the user.

In at least some examples, the apparatus 20 comprises means for providing to a user of the hearing aid 10 an indication to remove the hearing aid 10

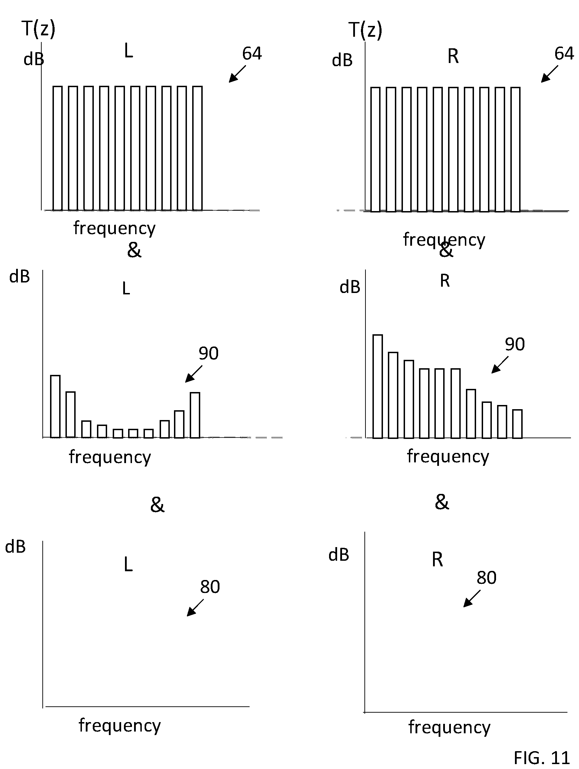

FIG. 11 illustrates an example (simplified) of a target sound 64 for the left ear (L) and for the right ear (R) when the hearing aid(s) 10 are not in use with the adjustment of audio processing 30 at the apparatus 20. The additional audio processing system characteristic function 90 provides, at the apparatus 20, all of the hearing-loss compensation. The additional audio processing system characteristic function 90 replicates the hearing-loss compensation defined by the original audio processing settings 12 of the hearing aid 10 which defines the original hearing aid system characteristic function 70 for the hearing aid 10. The combination of the target sound 64 and the hearing-loss compensation (the additional audio processing system characteristic function 90) produces hearing-loss compensated target sound 14 to the user. The user perceives the target sound 64 because of their hearing-loss 62 (previously illustrated in FIGs 5A, 5B).

The preceding examples relate to an apparatus 20 comprising means for:

audio processing 30 of audio data 32 specifying a target sound 64 for rendering;
wireless communication with a hearing aid 10 to obtain audio processing settings 12 of the hearing aid 10; and
adjusting audio processing 30 of the audio data 32 in dependence upon the audio processing settings 12 of the hearing aid 10 to create adjusted audio data 34 for rendering as adjusted target sound 42.

The wireless communication with the hearing aid 10 to obtain audio processing settings 12 of the hearing aid 10 can, for example, comprise transfer to the apparatus 20 from the hearing aid 10 of the audio processing settings 12 or an indication of the audio processing settings 12.

In at least some examples, adjusting audio processing 30 of audio data 32 in dependence upon the audio processing settings 12 of the hearing aid 10 causes adjustment of at least one acoustic characteristic of the adjusted target sound 42 in dependence upon the audio processing settings 12 of the hearing aid 10. In some examples, the at least one acoustic characteristic is frequency-amplitude equalization. In some examples, the at least one acoustic characteristic relates to audio characteristics that position an audio source.

In at least some examples, adjusting audio processing 30 of audio data 32 in dependence upon the audio processing settings 12 of the hearing aid 10 comprises adjusting audio processing 30 of the audio data 32 to reduce or eliminate audio processing 30 at the hearing aid 10 as defined by audio processing settings 12.

In at least some examples, the audio processing settings 12 of the hearing aid 10 define a hearing-loss compensation at the hearing aid 10 and adjusting audio processing 30 of audio data 32 in dependence upon the audio processing settings 12 of the hearing aid 10 comprises adjusting audio processing 30 of audio data 32 to perform some or all of the hearing-loss compensation as defined by the audio processing settings 12.

In at least some examples, an original hearing aid system characteristic function 70 of the hearing aid 10 is parameterized by audio processing settings 12 of the hearing aid 10, and the means for adjusting audio processing 30 of audio data 32 in dependence upon the audio processing settings 12 of the hearing aid 10 to create adjusted audio data 34 for rendering as adjusted target sound 42, is configured to: adjust a system characteristic function used by the hearing aid 10 for hearing-loss compensation to be an adjusted (hearing aid) system characteristic function 80 for adjusted partial hearing-loss compensation at the hearing aid 10;

adjust a system characteristic function used for the audio processing 30 of audio data 32, to be an adjusted system characteristic function (e.g. additional audio processing system characteristic function 90) that creates the adjusted audio data 34 for rendering as adjusted target sound 42,

where the adjusted (hearing aid) system characteristic function 80 for adjusted hearing-loss compensation at the hearing aid 10 and the adjusted system characteristic function (e.g. additional audio processing system characteristic function 90) that creates the adjusted audio data 34 for rendering as adjusted target sound 42, in combination are (substantially) equivalent to the original hearing aid system characteristic function 70 of the hearing aid 10 that is parameterized by audio processing settings 12 of the hearing aid 10.

In at least some examples, the audio processing settings 12 of the hearing aid 10 define a hearing-loss compensation at the hearing aid 10 and the adjusting audio processing 30 of audio data 32 in dependence upon the audio processing settings 12 of the hearing aid 10 comprises: adjusting audio processing 30 of audio data 32 to perform some of the defined hearing-loss compensation; and adjusting audio processing 30 at the hearing aid 10 to perform a remainder of the defined hearing-loss compensation.

In at least some examples, the audio processing settings 12 of the hearing aid 10 define a hearing-loss compensation at the hearing aid 10. The hearing-loss compensation is performed using an original hearing aid system characteristic function 70 of the hearing aid 10 that is parameterized by audio processing settings 12 of the hearing aid 10. Adjusting audio processing 30 of audio data 32 in dependence upon the audio processing settings 12 of the hearing aid 10 to create adjusted audio data 34 for rendering as adjusted target sound 42, comprises causing the adjusted target sound 42 to differ from the target sound by some but not all of the original hearing aid system characteristic function 70 of the hearing aid 10.

Let the target sound 42 be T, the hearing-loss be L, the hearing aid processing defined by the hearing aid audio processing setting 12 be H, the adjusted audio processing 30 defined by the additional audio processing system characteristic function 90 be A, the adjusted hearing aid processing (if any adjusted hearing aid processing) defined by the adjusted hearing aid system characteristic function 80 be X.

Then for transfer functions: $L(z).H(z).T(z) = T(z) => H(z) = L(z)^{-1}$ where z if for example a frequency parameter.

When the hearing aid is not in place, and all hearing-loss compensation is performed by the apparatus 20, then for transfer functions: $L(z).A(z).T(z) = T(z) => A(z) = H(z) = L(z)^{-1}$

When the hearing aid is in place, and some hearing-loss compensation is performed by the apparatus 20 and some by the hearing aid, then for transfer functions:

$$L(z).X(z). A(z).T(z) = T(z) \quad => X(z). A(z)= H(z) = L(z)^{-1}$$

For additive functions, as described above:

$$L(z) + H(z) + T(z) = T(z) \quad => H(z) = -L(z)$$

where z if for example a frequency parameter.

When the hearing aid is not in place, and all hearing-loss compensation is performed by the apparatus 20, then: $L(z) + A(z) +T(z) = T(z) => A(z) = H(z) = -L(z)$

When the hearing aid is in place, and some hearing-loss compensation is performed by the apparatus 20 and some by the hearing aid, then:

$$L(z) + X(z) + A(z) + T(z) = T(z) \quad => X(z) + A(z)= H(z) = -L(z)$$

In at least some examples, the apparatus 20 is configured to determine the adjusted hearing aid system characteristic function 80 (X) and the additional audio processing system characteristic function 90 (A) based on the original hearing aid system characteristic function 70 (H) defined by the original hearing aid audio processing settings 12. In some examples the apparatus 20 is configured to inform the hearing aid 10 of the different (new) adjusted hearing aid system characteristic function 80 (X).

In at least some examples, the apparatus 20 is configured to determine adjusted hearing aid audio processing settings 82 equivalent to the adjusted hearing aid system characteristic function 80 (X). In some examples, the apparatus 20 is configured to inform the hearing aid 10 of the adjusted hearing aid audio processing settings 82.

The adjusted hearing aid system characteristic function 80 (X) can be defined (and/or communicated) in absolute terms or in relative terms, for example, as an adjustment to the original hearing aid system characteristic function 70 (H) which is defined by the audio processing settings 12.

In at least some examples, when the additional audio processing system characteristic function 90 (A) provides full hearing-loss compensation, the apparatus 20 is provided to a user of the hearing aid 10 an indication to remove the hearing aid 10. The hearing-loss compensation is performed at the apparatus 20 using the original system characteristic function 70 of the hearing aid 10 parameterized by the audio processing settings 12 of the hearing aid 10.

In at least some examples, when the additional audio processing system characteristic function 90 (A) provides partial hearing-loss compensation, the apparatus 20 provides to a user of the hearing aid 10 an indication to use or keep using the hearing aid 10. The hearing-loss compensation is performed at the apparatus 20 and the hearing aid 10 which in combination use a system characteristic function 70 of the hearing aid 10 parameterized by the audio processing settings 12 of the hearing aid 10.

In at least some examples, the apparatus 20 is configured to wirelessly communication with the hearing aid 10 to obtain the audio processing settings 12 of the hearing aid 10, store the audio processing settings 12 in a memory; and access the stored audio processing settings 12 to adjust audio processing 30 of the audio data 32 in dependence upon the audio processing settings 12 of the hearing aid 10 to create adjusted audio data 34 for rendering as adjusted target sound 42. This can, for example, facilitate the additional audio processing system characteristic function 90 providing full hearing-loss compensation in the absence or loss of the hearing aid 10.

In at least some examples, the audio processing settings 12 define an original system characteristic function 70 of the hearing aid 10. The updated adjusted audio processing settings 82 define an updated adjusted hearing aid system characteristic function 80 of the hearing aid 10. The updated system characteristic function 80 of the hearing aid 10 is a reduced version of the original system characteristic function 70 of the hearing aid 10 that has (compared to the original system characteristic function 70) at each of multiple frequency bins, less or the same amplification and that has (compared to the original hearing aid system characteristic function 70) over a frequency range covering the multiple frequency bins, less amplification. The system characteristic function 80 of the hearing aid 10 has, at the majority of the multiple frequency bins, less amplification than the original system characteristic function of the hearing aid 10. For example, comparing the adjusted hearing aid system characteristic function 80 of FIG 8A with the original hearing aid system characteristic function 70 of FIG 7A, then at each frequency bin the value of the adjusted hearing aid system characteristic function 80 of FIG 8A is less than the value of the original hearing aid system characteristic function 70 of FIG. 7A. Also, the sum of the values of the adjusted hearing aid system characteristic function 80 of FIG 8A across all the frequency bins is less than the sum of the values of the original hearing aid system characteristic function 70 of FIG 7A. The same applies for FIGs 8B and 7A (the right ear).

A difference between the adjusted system characteristic function 80 of the hearing aid 10 and the original system characteristic function 70 of the hearing aid 10 is variable across the multiple frequency bins. The difference between the adjusted system characteristic function 80 of the hearing aid 10 (FIG. 8A) and the original system characteristic function 70 of the hearing aid 10 (FIG. 7A), which is equivalent to the additional audio processing system characteristic function 90 in the example of FIG. 9A, is variable across the multiple frequency bins.

The adjusted audio processing 30 of the audio data 32 is an adjustment across the multiple frequency bins in dependence upon the audio processing settings 12 of the hearing aid 10 to create adjusted audio data 34 for rendering as adjusted target sound 42.

The communications between the apparatus 20 and a hearing aid 10 can, for example, have a standardized format. For example, using data packets having defined hierarchical information elements.

Communication between an apparatus 20 and a hearing aid 10 can inform the hearing aid 10 of the capabilities of the apparatus 20 and in particular its ability for adaptive audio processing based on audio settings of the hearing aid 10. Communication between an apparatus 20 and a hearing aid 10 can inform the apparatus 20 of the capabilities of the hearing aid and in particular its ability to provide audio processing settings 12 of the hearing aid 10.

Communication between an apparatus 20 and a hearing aid 10 can inform the apparatus 20 of the capabilities of the hearing aid and in particular its ability to adapt its audio processing based on adjusted hearing aid audio processing settings 82 determined by the audio apparatus 20.

The audio data 32 can be any suitable audio data. In some examples, the audio data 32 is spatial audio data comprising audio sources that have controllable positions in a sound scene. In some examples, spatial audio processing performed by the apparatus 20 is adjusted to take account of the audio processing settings 12 of the hearing aid 10, for example, to fully or partial compensate for hearing-loss or to adjust the spatial audio processing so that the sound scene is perceived as intended by the user after hearing-loss compensation by the hearing aid 10 using the audio processing settings 12 or adjusted audio processing settings 82.

In some but not necessarily all examples the audio data is metadata assisted spatial audio (MASA) data.

In some examples, the audio data 32 is audio data comprising audio sources that have positions in a sound scene that is fixed relative to the real world. In some examples, spatial audio processing performed by the apparatus 20 uses a head related transfer function (HRTF) and is adjusted to take account of the audio processing settings 12 of the hearing aid 10, for example, to fully or partial compensate for hearing-loss or to adjust the HRTF processing so that the sound scene is perceived as intended by the user after hearing-loss compensation by the hearing aid using the audio processing settings 12 or adjusted audio processing settings 82. A head related transfer function (HRTF) provides a desired direction of arrival of sound from a rendered sound source.

Thus, in some examples, the audio processing 30 of the audio data 32 in dependence upon the audio processing settings 12 of the hearing aid 10 to create adjusted audio data for rendering as adjusted target sound 42 is frequency-selective and/or spatially-selective. For example frequency-selective amplification and/or spatial-selective amplification such as beam-forming.

In some examples, the rendering 40 is performed by a Moving Picture Group Immersive (MPEG-I ) audio virtual acoustic renderer.

The wireless communication 11 between the apparatus 20 and the hearing aid 10 can, for example, use an ad-hoc radio communication protocol, such as , for example Bluetooth™ low energy (BLE). The ad-hoc radio communication protocol can, for example, create an ad hoc network comprising a master device and one or more slave devices, where the master device provides a clock signal to which the network is synchronized. The network can use a fast frequency hopping sequence dependent upon an identity of the master.

Methods exist for audio processing in hearing aids and for audio rendering from loudspeakers or headphones. Spatial audio capture and rendering enables hearing aid -style functionality with normal earbuds. However, the current methods do not consider a situation where there is "double processing": for example, a renderer may be attenuating a certain frequency range and a hearing aid might be amplifying the same frequency range.

The following example relates to reproducing audio to a user wearing a hearing aid, specifically using headphones for immersive audio reproduction. The apparatus 20 enables:

the hearing aid 10 to negotiate with the apparatus 20 in order to exchange information on audio processing settings 12 of the hearing aid 10; to perform determination which of the audio processing can be performed by the apparatus 20; to make a first selection of audio processing to be performed in the apparatus 20 and a second selection in the hearing aid 10;

and to reproduce the target sound 42 at the apparatus 20 using the first selection of processing and apply the second selection of processing in the hearing aid 10, if any.

The first selection and second selection of audio processing can be selected such that they, when combined, meet, or exceed the audio processing settings 12 of the hearing aid 10.

A use case can be as follows: a user listens to audio data 32 from his headphones 41. He is wearing his hearing aid 10 under the headphones 41. His hearing aid 10 negotiates with the audio renderer apparatus 20 and as a result the audio renderer apparatus 20 directly applies part or all the audio processing 30 that has been configured in the hearing aid 10. This leads to improved audio quality (due to lack of double processing) and lesser computational complexity in the hearing aid 10 (as it can use less steep filters having less coefficients, for example). If the audio renderer apparatus 20 can perform all the processing configured in the hearing aid 10, the system can prompt the user that he can take off the hearing aid 10 completely while listening to the content.

Examples of hearing aid audio processing include: audio volume/gain increase, audio equalization (digital filtering), audio beamforming.

Examples of audio rendering steps: audio volume/gain control, audio equalization, enhancing a portion of the audio scene to simulate audio beamforming.

When the apparatus 20 is used as described, a better user experience occurs as the audio quality is improved due to less double processing (renderer apparatus 20 processing something and the hearing aid equalizer trying to reverse this) and power consumption in hearing aid 10 is lessened (due to less steep filters with less coefficients being used). If not used, a suboptimal user experience occurs as, for example, the renderer apparatus 20 can be attenuating a frequency range which the hearing aid 10 then attempts to amplify. Furthermore, in complex and rich, e.g., 6DoF scenes it may be harder for a hearing aid 10 to perform optimally compared to the situation where this is taken into account in the rendering of the scene knowing the level of impairment of the listener.

The approach has application to ongoing standardization efforts in MPEG ISO/IEC 23090-4. MPEG-I Audio Phase 2 (ISO/IEC 23090-4) is an example of a VR/AR standard. In particular, the negotiation process and interface between the hearing aid 10 and the audio renderer apparatus for negotiating about their processing capabilities. Such interface or negotiation mechanism could become part of the MPEG-I standard. MPEG-I technology-wise is more than suitable for implementing the adjusted audio processing 30 due to vast number of different content representation options and audio modification capabilities.

Let us consider an example where a user is consuming spatial audio with headphones 41. Sources may be spatialized at different spatial locations around the user using Head Related Transfer Function (HRTF) filtering techniques. The MPEG-I audio renderer 40 can output audio to headphones 41 binaurally or to physical loudspeakers. The renderer can also apply various audio effects such as equalizer filtering, changing the listener position in the audio scene, increasing the volume of certain objects, reverberation, and so on.

The user is listening to the rendered content through his hearing aid which are worn under the headphones. The hearing aid has several audio processing settings, such as audio focus direction and strength (to focus towards a spatial direction) and equalizer settings (to compensate hearing loss at a certain frequency range). However, it is not optimal to have both the audio renderer and hearing aid process the audio with their own unadjusted settings. More optimal audio quality can be obtained if the audio renderer apparatus 20 performs its audio processing 30 so that it is already close to what the hearing aid processing would do on top.

The hearing aid 10 makes available the audio processing settings 12 it is applying. In the example this is audio focus direction and amount and audio EQ settings. Negotiation is performed between the audio renderer apparatus 20 and the hearing aid 10 to determine what of the hearing aid processing 30 is such that it can be performed by the audio renderer apparatus 20. For example, it can be difficult to perform audio beamforming with a hearing aid to audio which is reproduced with headphones.

As a result of the negotiation, the MPEG-I renderer apparatus 20 performs part of the processing (originally) configured in the hearing aid 10 and the hearing aid 10 will only process the remainder. In this example the audio renderer apparatus 20 performs the audio beamforming internally so that the hearing aid 10 does not need to perform it. The audio renderer apparatus also performs audio EQ partially so that the hearing aid 10 only needs to apply the additional EQ in order to meet the total target EQ curve. As a result, audio quality is improved and computational complexity lessened as there is no double processing and the audio renderer apparatus 20 now produces audio which is close to audio quality configured in the hearing aid 10 and the hearing aid just applies the extra, mild processing.

If the renderer apparatus 20 can perform the processing configured in the hearing aid 10 the system can prompt the user that he can take off the hearing aid 10 while listening to the content. If the renderer apparatus 20 cannot perform all processing of the hearing aid 10 the user can be made aware of this and he can still wear his hearing aid 10, but the hearing aid processing be adjusted and will perform only necessary mild processing required to meet the full target of hearing aid processing.

FIG, 12 illustrates an example of a method 500. The method 500 at block 502 comprises wirelessly communicating 11 with a hearing aid 10 to obtain audio processing settings 12 of the hearing aid 10. The method 500 at block 504 comprises adjusting audio processing 30 of audio data 32, specifying a target sound 64 for rendering 40, in dependence upon the audio processing settings 12 of the hearing aid 10 to create adjusted audio data for rendering 40 as adjusted target sound 42. Optionally, in some but not all embodiments, the method 500 at block 506 comprises Indicating to the hearing aid 10 adjusted audio processing settings 82 for use by the hearing aid 10.

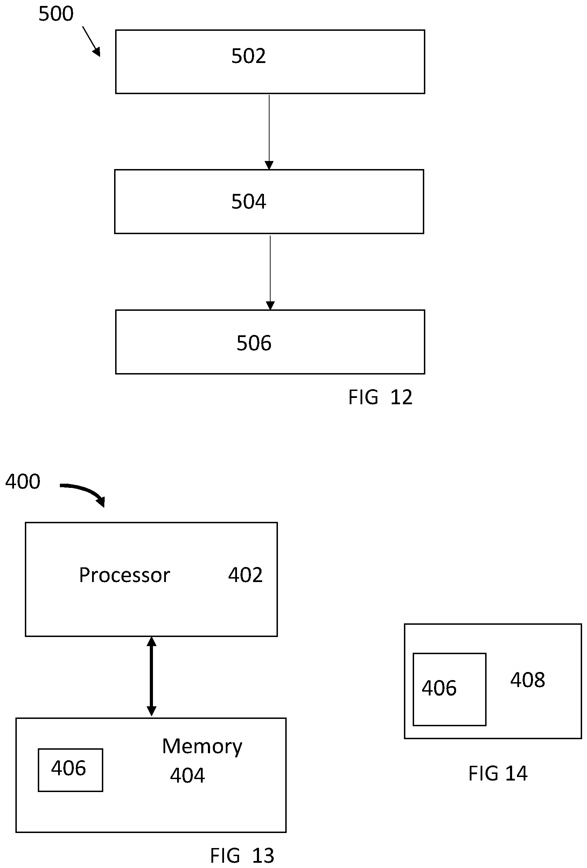

FIG. 13 illustrates an example of a controller 400 suitable for use in the apparatus 20. Implementation of a controller 400 may be as controller circuitry. The controller 400 may be implemented in hardware alone, have certain aspects in software including firmware alone or can be a combination of hardware and software (including firmware).

As illustrated in FIG. 13 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 20 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 20 comprises:

at least one processor 402; and
at least one memory 404 including computer program code
the at least one memory 404 and the computer program code configured to, with the at least one processor 402, cause the apparatus 20 at least to perform:

wirelessly communicating 11 with a hearing aid 10 to obtain audio processing settings 12 of the hearing aid 10; and
adjusting audio processing 30 of audio data 32, specifying a target sound 64 for rendering 40, in dependence upon the audio processing settings 12 of the hearing aid 10 to create adjusted audio data for rendering 40 as adjusted target sound 42.

The apparatus 20 comprises:

at least one processor 402; and

at least one memory 404 including computer program code,
the at least one memory storing instructions that, when executed by the at least

one processor 402, cause the apparatus at least to:
wirelessly communicate 11 with a hearing aid 10 to obtain audio processing settings 12 of the hearing aid 10; and
adjust audio processing 30 of audio data 32, specifying a target sound 64 for rendering 40, in dependence upon the audio processing settings 12 of the hearing aid 10 to create adjusted audio data for rendering 40 as adjusted target sound 42.

As illustrated in Fig 14, the computer program 406 may arrive at the apparatus 20 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 20 may propagate or transmit the computer program 406 as a computer data signal.
Computer program instructions for causing an apparatus to perform at least the following or for performing at least the following:

wirelessly communicate 11 with a hearing aid 10 to obtain audio processing settings 12 of the hearing aid 10; and
adjust audio processing 30 of audio data 32, specifying a target sound 64 for rendering 40, in dependence upon the audio processing settings 12 of the hearing aid 10 to create adjusted audio data for rendering 40 as adjusted target sound 42.

The computer program instructions may be comprised in a computer program, a non-transitory computer readable medium, a computer program product, a machine readable medium. In some but not necessarily all examples, the computer program instructions may be distributed over more than one computer program.
Although the memory 404 is illustrated as a single component/circuitry it may be implemented as one or more separate components/circuitry some or all of which may be integrated/removable and/or may provide permanent/semi-permanent/ dynamic/cached storage.
Although the processor 402 is illustrated as a single component/circuitry it may be implemented as one or more separate components/circuitry some or all of which may be integrated/removable. The processor 402 may be a single core or multi-core processor.
References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.
As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 20 can be a module.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1.    An apparatus comprising means for:

audio processing of audio data specifying a target sound for rendering;
wireless communication with a hearing aid to obtain audio processing settings of the hearing aid; and
adjusting audio processing of the audio data in dependence upon the audio processing settings of the hearing aid to create adjusted audio data for rendering as adjusted target sound.

2.    An apparatus as claimed in claim 1, wherein the means for adjusting audio processing of audio data in dependence upon the audio processing settings of the hearing aid is configured to cause adjustment of at least one acoustic characteristic of the adjusted target sound in dependence upon the audio processing settings of the hearing aid.

3.    An apparatus as claimed in claim 1 or 2, wherein the means for adjusting audio processing of audio data in dependence upon the audio processing settings of the hearing aid is configured to adjust audio processing of the audio data to reduce or eliminate audio processing at the hearing aid as defined by the audio processing settings.

4.    An apparatus as claimed in any preceding claim, wherein the audio processing settings of the hearing aid define a hearing-loss compensation at the hearing aid, and wherein the means for adjusting audio processing of audio data in dependence upon the audio processing settings of the hearing aid is configured to adjust audio processing of the audio data to perform some or all of the hearing-loss compensation as defined by the audio processing settings.

5.    An apparatus as claimed in any preceding claim, comprising means for receiving from the hearing aid an indication that the hearing aid is in use.

6.    An apparatus as claimed in any preceding claim, comprising means for:

wireless communication with the hearing aid to obtain audio processing settings of the hearing aid;
storing the audio processing settings;
accessing the stored audio processing settings to adjust audio processing of the audio data in dependence upon the audio processing settings of the hearing aid to create adjusted audio data for rendering as adjusted target sound.

7. An apparatus as claimed in any preceding claim, wherein a system characteristic function of the hearing aid is parameterized by audio processing settings of the hearing aid, and
wherein the means for adjusting audio processing of audio data in dependence upon the audio processing settings of the hearing aid to create adjusted audio data for rendering as adjusted rendered sound, is configured to:

adjust a system characteristic function used by the hearing aid for hearing-loss compensation to be an adjusted system characteristic function for adjusted partial hearing-loss compensation at the hearing aid;
adjust a system characteristic function used for the audio processing of audio data, to be an adjusted system characteristic function that creates the adjusted audio data for rendering as adjusted target sound,
wherein the adjusted system characteristic function for adjusted hearing-loss compensation at the hearing aid and the adjusted system characteristic function that creates the adjusted audio data for rendering as adjusted target sound, in combination are equivalent to the system characteristic function of the hearing aid that is parameterized by audio processing settings of the hearing aid.

8. An apparatus as claimed in any preceding claim, wherein the audio processing settings of the hearing aid define a hearing-loss compensation at the hearing aid, and wherein the means for adjusting audio processing of audio data in dependence upon the audio processing settings of the hearing aid is configured to adjust audio processing of the audio data to perform some of the defined hearing-loss compensation; and
adjust audio processing at the hearing aid to perform a remainder of the defined hearing-loss compensation.

9. An apparatus as claimed in any preceding claim, comprising means for:
wireless communication with the hearing aid to change audio processing settings of the hearing aid to updated audio processing settings.

10. An apparatus as claimed in claim 9, wherein the audio processing settings define an original system characteristic function of the hearing aid

wherein the updated audio processing settings define an updated system characteristic function of the hearing aid
wherein the updated system characteristic function of the hearing aid is a reduced version of the original system characteristic function of the hearing aid that has at each of multiple frequency bins, less or the same amplification and that has over a frequency range covering the multiple frequency bins, less overall amplification.

11. An apparatus as claimed in claim 10, wherein the updated system characteristic function of the hearing aid has, at the majority of the multiple frequency bins, less amplification than the original system characteristic function of the hearing aid.

12. An apparatus as claimed in claim 10 or 11, wherein a difference between the updated system characteristic function of the hearing aid and the original system characteristic function of the hearing aid is variable across the multiple frequency bins.

13. An apparatus as claimed in claim 10 or 11, comprising means for determining an updated system characteristic function of the hearing aid or an adaptation to the original system characteristic function required to produce the updated system characteristic function of the hearing aid

14. An apparatus as claimed in any preceding claim, wherein the audio processing of the audio data in dependence upon the audio processing settings of the hearing aid to create adjusted audio data for rendering as adjusted target sound is frequency-selective and/or spatially-selective.

15. A method comprising:

wireless communication with a hearing aid to obtain audio processing settings of the hearing aid; and
adjusting audio processing of audio data, specifying a target sound for rendering,
in dependence upon the audio processing settings of the hearing aid to create adjusted audio data for rendering as adjusted target sound.

FIG. 1

FIG. 2

dB

L

0 ····················· 62

60

frequency

FIG. 3A

dB

R

0 ·····················

62

60

frequency

FIG. 3B

dB

L

70

12

frequency

FIG. 4A

dB

R

70

12

frequency

FIG. 4B

dB

L

70

0

60

frequency

FIG. 5A

dB

R

70

0

60

frequency

FIG. 5B

12

30,40

10

62

32 → | Adjust audio processing & rendering | 42 → | Hearing Aid | 14 → | Hearing Loss | 64 →

30    50    40

FIG. 6

dB A(z)

L

70

12

frequency

FIG. 7A

A(z)

dB

R

70

12

frequency

FIG. 7B

B(z)

dB

L

80

82

frequency

FIG. 8A

B(z)

dB

R

80

82

frequency

FIG. 8B

P(z)

dB

L

90

frequency

FIG. 9A

P(z)

dB

R

90

frequency

FIG. 9B

FIG. 10

FIG. 11

500

502

504

506

FIG 12

400

Processor          402

Memory
406        404

FIG 13

406        408

FIG 14

Europäisches
Patentamt

European
Patent Office

Office européen
des brevets

# EUROPEAN SEARCH REPORT

**Application Number**

EP 24 21 8715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/080398 A1 (WALDMANN BERND [CH]) 1 April 2010 (2010-04-01) * paragraphs [0042], [0053], [0118] - [0134]; figures 1-4 * | 1-15 | INV. H04R25/00 H04R25/04 |
| X | US 2012/183166 A1 (SCHNEIDER PHILIPP [CH] ET AL) 19 July 2012 (2012-07-19) * paragraphs [0219] - [0226]; figure 3 * | 1,15 | |
| X | US 2021/195346 A1 (FERRIER MARCIANO BENITO [NL] ET AL) 24 June 2021 (2021-06-24) * paragraphs [0052] - [0058]; figure 2 * | 1,15 | |
| A | US 10 028 065 B2 (COCHLEAR LTD [AU]) 17 July 2018 (2018-07-17) * abstract; figures 1-2D * | 1-15 | |

**TECHNICAL FIELDS SEARCHED (IPC)**

H04R
H04M

The present search report has been drawn up for all claims

| Place of search | Date of completion of the search | Examiner |
|---|---|---|
| Munich | 15 April 2025 | Righetti, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 24 21 8715

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| US 2010080398 A1 | 01-04-2010 | EP 2103178 A1 | 23-09-2009 |
| | | US 2010080398 A1 | 01-04-2010 |
| | | WO 2008071231 A1 | 19-06-2008 |
| US 2012183166 A1 | 19-07-2012 | EP 2484124 A2 | 08-08-2012 |
| | | US 2012183166 A1 | 19-07-2012 |
| | | WO 2009147253 A2 | 10-12-2009 |
| US 2021195346 A1 | 24-06-2021 | AU 2019324315 A1 | 22-04-2021 |
| | | CA 3113989 A1 | 27-02-2020 |
| | | CN 112956214 A | 11-06-2021 |
| | | EP 3841762 A1 | 30-06-2021 |
| | | JP 7611152 B2 | 09-01-2025 |
| | | JP 2021536207 A | 23-12-2021 |
| | | KR 20210055715 A | 17-05-2021 |
| | | US 2021195346 A1 | 24-06-2021 |
| | | WO 2020040638 A1 | 27-02-2020 |
| US 10028065 B2 | 17-07-2018 | NONE | |

EPO FORM P0459

For more details about this annex : see Official Journal of the European Patent Office, No. 12/82